# EUROPEAN PATENT SPECIFICATION

(11) **EP 0 940 966 B1**
(45) Date of publication and mention of the grant of the patent: **17.04.2002**
(21) Application number: 98301625.4
(22) Date of filing: 05.03.1998
(51) Int. Cl.: H04N 1/00, G06F 3/023

(54) **Book-type controller for interactive multimedia system**
Buchförmige Steueranordnung für interaktives Multimedia-System
Dispositif de commande en forme de livre pour système multimédia interactif

(43) Date of publication of application: 08.09.1999
(73) Proprietor: INTERNATIONAL VILLAGE CO., LTD., Taipei 104 (TW)
(72) Inventor: Chang, King Ting, SEC5, Hsin-I Road, Taipei (TW)
(74) Representative: Stuttard, Garry Philip

(56) References cited:
- EP-A- 0 738 078
- WO-A-87/05415
- WO-A-97/04592
- US-A- 5 597 307
- PATENT ABSTRACTS OF JAPAN vol. 010, no. 354 (P-521), 28 November 1986 & JP 61 153723 A (RICOH CO LTD), 12 July 1986
- PATENT ABSTRACTS OF JAPAN vol. 007, no. 160 (P-210), 14 July 1983 & JP 58 068272 A (NIPPON VICTOR KK), 23 April 1983
- PATENT ABSTRACTS OF JAPAN vol. 013, no. 426 (P-935), 22 September 1989 & JP 01 159720 A (K S K CONTROL KK), 22 June 1989
- PATENT ABSTRACTS OF JAPAN vol. 008, no. 248 (P-313), 14 November 1984 & JP 59 121426 A (RICOH KK), 13 July 1984
- PATENT ABSTRACTS OF JAPAN vol. 007, no. 216 (P-225), 24 September 1983 & JP 58 109922 A (MATSUSHITA DENKI SANGYO KK), 30 June 1983

## Description

The present invention is related to a controller for an interactive multimedia playing system, and more particularly to a book-type controller for an interactive VCD playing system or an interactive DVD playing system.

Conventional audio and video players have been gradually replaced by a variety of new audio / video electronic products such as Video Compact Disk (VCD) players and Digital Versatile Disk (DVD) players. Owing to the multimedia effects and the interactively operative modes of these new instruments, the functions and performances of audio / video electronic products have been significantly improved. For example, a user can select and / or edit any desired term according to the instructions given by the players during the period the compact disk is being played such that the players can execute the selected term and / or perform the desired operations rather than just play the disk from beginning to end. The use-friendliness, however, is accordingly decreased with the complexity of the operations. Consequently, it is difficult for the illiterates and the electric appliance-unfamiliar people, especially for the kids and the olds, to manipulate the devices.

US-A-5597307 discloses a remote control for interactive media in the form of a printed publication (*eg* a book, magazine or catalogue). One or more buttons attached to the printed publication allow users to control remotely a host device.

JP-A-61/153723 discloses an album keyboard containing illustrations which when depressed send a signal to a VTR.

JP-A-58/109922 discloses a page identifying device for a book-type keyboard.

WO-A-87/05415 discloses page identification means in a book-type keyboard having a plurality of pages.

Therefore, an objective of the present invention is to provide a book-type controller for an interactive multimedia playing system, which uses illustrative media to make the interactive multimedia playing system more user-friendly and easy to be operated.

Another object of the present invention is to provide a book-type controller for an interactive multimedia playing system, which uses book-type illustrative media to perform a group of information in an easy and convenient manner.

The present invention relates to a book-type controller (12) for an interactive multimedia playing system (11) comprising;
an illustrative book (121) including a plurality of pages (1211) each of which shows thereon a group of selective terms (1212) for allowing a user to give a command to the multimedia playing system (11) therethrough; and
a control-executing device (122) for conveying the command to the multimedia playing system (11),
said controller including:
   a plurality of input sensors (124) arranged on or in each of the plurality of pages (1211), each input sensor being associated with a selective term (1212) and capable of being enabled to output a triggering signal in response to pressing said selected term; and
   a signal-transmitting device (127) electrically connected to the plurality of input sensors (124) for transmitting the triggering signal from the enabled input sensor (124) to the multlmedia playing system (11) to have a software-executing device (111) of the multimedia playing system (11) execute a function represented by the selective term associated with the enabled input sensor,
characterized in that the controller further includes a page identifying device (126) electrically connected to the signal-transmitting device (127), said page identifying device (126) being capable of outputting to said multimedia playing system via said signal transmitting device a page identifying signal for identifying an on-line page and for determining sensors of said on-line page that are allowed to be enabled, and of enabling any of the plurality of input sensors (124) of the on-line page.

In an embodiment of the book-type controller, the page identifying devices includes a plurality of different patterns of through holes respectively provided in the plurality of pages at specific locations, and a photo-sensor positioned under the illustrative book for detecting a pattern of the through holes to output the page identifying signal.

Each of the input sensors in an embodiment of the book-type controller can consist of a thin-film contact switch which is conducted in response to a user's pressing operation. Cooperating with an encoder electrically connected therewith, the thin-film contact switches have their switch states encoded so as to output the triggering signal in response to the conduction of one of the thin-film contact switches.

In an embodiment, each of the thin-film contact switches includes two conductive carbon films and an insulating spacer located between the two carbon films, and the two carbon films contact with each other due to the user's press so as to conduct.

According to the present invention, the multimedia playing system preferably further includes an IR receiver when the signal-transmitting device is an IR emitter. The IR emitter transmits the triggering signal to the IR receiver so as to execute the function of the selected term.

The multimedia playing system, for example, can be a VCD player, or a DVD player.

The present invention may best be understood through the following description with reference to the accompanying drawings, in which:
Fig. 1 is a schematic diagram showing a preferred embodiment of a controller according to the present invention and a multimedia playing system the controller is used with;
Fig. 2 is a schematic block diagram showing a preferred embodiment of a book-type controller according to the present invention;
Figs. 3A and 3B are schematic diagrams showing a disabled and an enabled states, respectively, of an input sensor used in a controller according to the present invention;
Figs. 4A∼4D schematically show through-hole patterns of a page identifying device used for different pages of a book-type controller according to the present invention; and
Fig. 4E schematically shows how the page identifying device determines a current page number by the alignment of the through-hole patterns with a photo-sensor.

The present invention will now be described more specifically with reference to the following embodiments. It is to be noted that the following descriptions of preferred embodiments of this invention are presented herein for purpose of illustration and description only; it is not intended to be exhaustive or to be limited to the precise form disclosed.

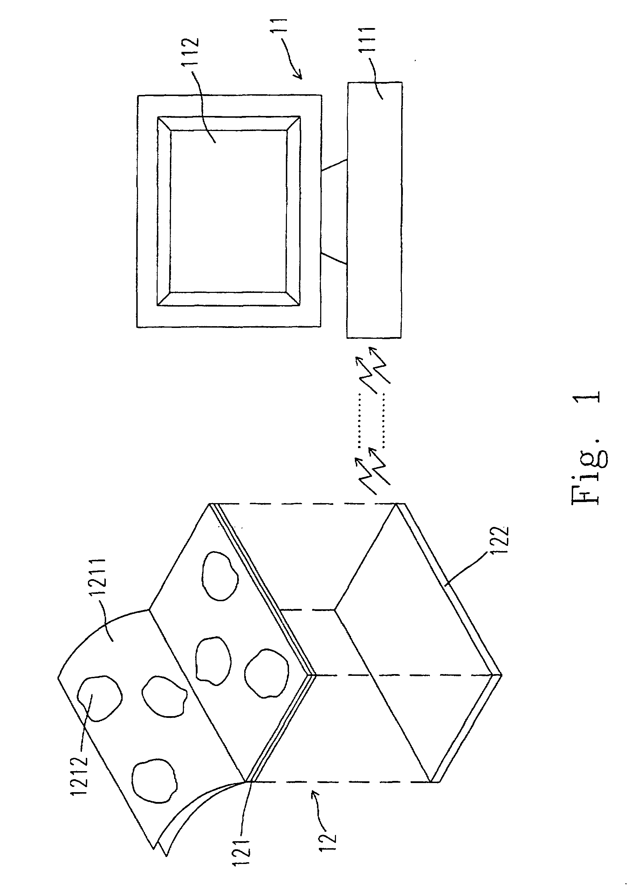

Please refer to Fig. 1 which is a schematic diagram showing a preferred embodiment of a controller 12 according to the present invention and a multimedia playing system 11 the controller 12 is used with. The multimedia playing system 11 shown in Fig. I includes a DVD player 111, and a display 112, such as a TV screen or a computer monitor connected to the DVD player 111. The controller 12 includes an illustrative book 121 having a plurality of pages 1211, and a control-executing device 122. In each page 1211, there are patterns 1212 corresponding to the patterns shown on the display 112 as selective terms. When a user presses one of the patterns 1212, the command for playing that selective term is transmitted to the DVD player 111 through the control-executing device 122 so as to play the selected term. The illustrative book 121 groups all the selective terms related to the contents of a compact disk together so that it is easy and convenient to control the DVD player 111. For example, if a disk having contents concerning the introduction of wild animals is to be played, a controller including an illustrative book having therein many animal images or other selective terms corresponding to those to be shown on the display is provided. When a user is interested in a certain animal or any selective term, he only needs to open the book to the page and press the page at the location having the corresponding image or pattern, and then the DVD player will execute the programs related to the animal image or the selected term to display further information, thereby achieving the purpose of interactive operation.

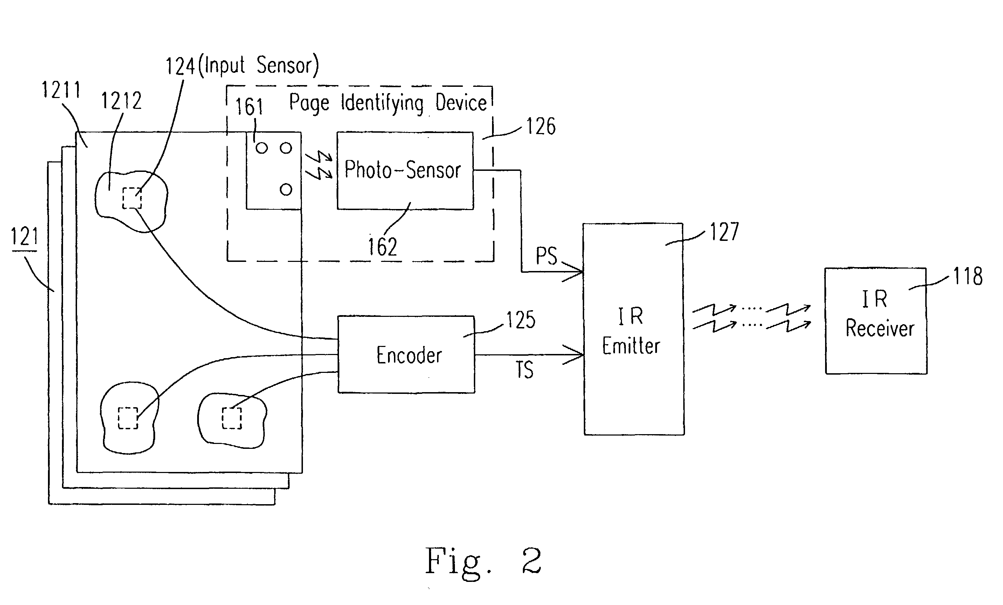

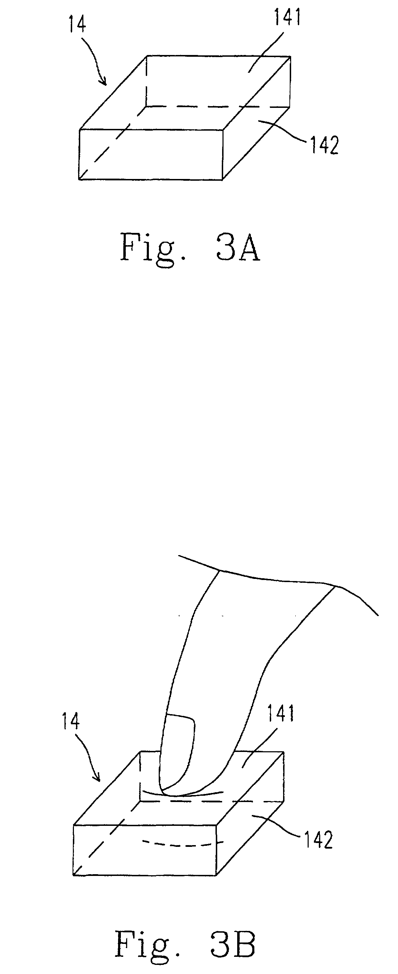

Please refer to Fig. 2 which schematically shows a preferred embodiment of the controller 12 of Fig. 1. The control-executing device 122 of the controller 12 includes a plurality of input sensors 124, an encoder 125, a page identifying device 126, and an infrared (IR) emitter 127. The input sensors 124 are mounted in the illustrative book 121 under the patterns 1212 of each page 1211, respectively, and electrically connected to the encoder 15. The input sensors 124 can be thin-film contact switches 14, each of which includes two conductive carbon films 141 and a ring-shaped insulating spacer 142 located between the two carbon films, as shown in Fig. 3A. When a user presses one of the patterns, the two conductive carbon films 141 are made to contact with each other within the spacer ring 142 so as to activate a selected term, as shown in Fig. 3B.

After a term is selected and the corresponding sensor 124 is enabled, the encoder 15 encodes the output of the sensor 124, and outputs a triggering signal TS. The triggering signal TS is then transmitted from the IR emitter 127 of the controller 12 to an IR receiver 118 included in the DVD player 111 to have the selected term played. Therefore, the command the user gives through the book-type controller 12 is conveyed to the DVD player 111 in a wireless transmission manner. It further enhances the convenience of the controller according to the present invention.

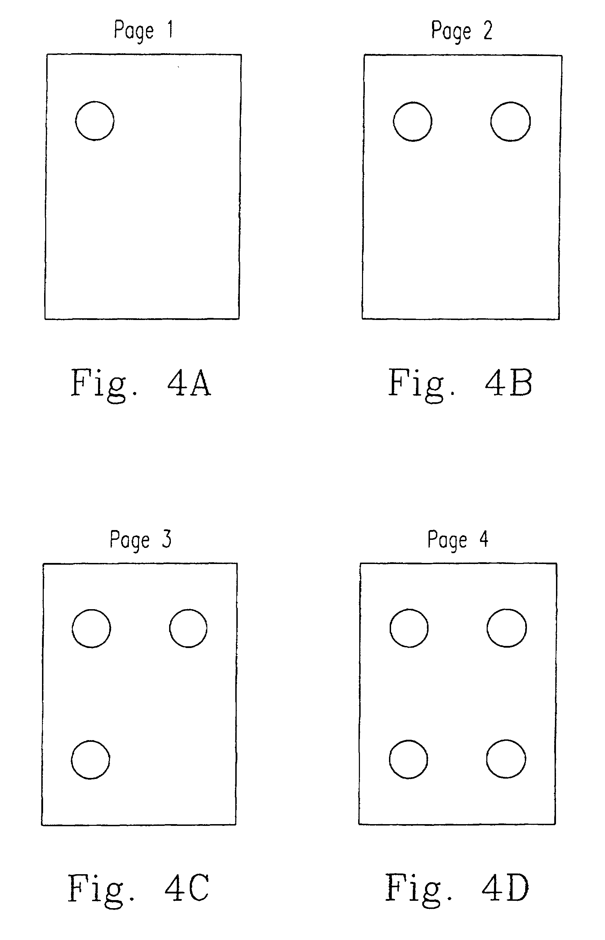

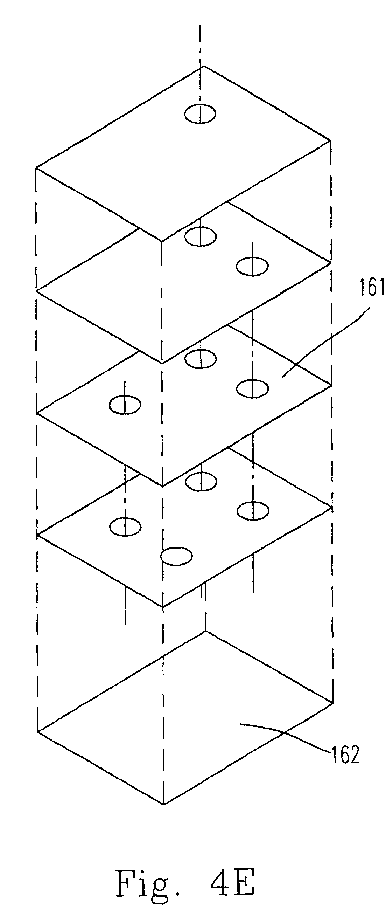

On the other hand, the page identifying device 126 is for determining what page 1211 is on-line. Any of the input sensors 124 in this on-line page 1211 is accordingly allowed to be enabled in response to the user's pressing a certain pattern 1212. A preferred embodiment of the page identifying device 126 is referred to Fig. 2 and Figs. 4A∼4E. The page identifying device 126 includes a plurality of different patterns of through holes 161 respectively provided in the pages 1211 at specific locations, right upper corners in this embodiment, and a photo-sensor 162 positioned under the illustrative book 121. Each page 1211 are provided therein a specific through-hole pattern 161. For example, the through-hole patterns shown in Fig. 4A to Fig. 4D represent pages No. 1 to 4, respectively. In the illustrative book 121, the pages 1211 are stacked on the top of one another, and the through-hole patterns 161 are in alignment with the photo-sensor 162 (Fig. 4E). When a page is turned, the photo-sensor 162 will detect different through-hole patterns 161, and thus output a page identifying signal PS to the DVD player 111 through the IR emitter 127 and IR receiver 118 to prepare another set of contents.

Although the controller of the present invention is illustratively used with a DVD player, the present controller can also be used with many other multimedia players such as a VCD player.

## Claims

1. A book-type controller (12) for an interactive multimedia playing system (11) comprising:
an illustrative book (121) including a plurality of pages (1211) each of which shows thereon a group of selective terms (1212) for allowing a user to give a command to the multimedia playing system (11) therethrough; and
a control-executing device (122) for conveying the command to the multimedia playing system (11),
said controller (12) including:
a plurality of input sensors (124) arranged on or in each of the plurality of pages (1211), each input sensor being associated with a selective term (1212) and capable of being enabled to output a triggering signal in response to pressing said selective term; and
a signal-transmitting device (127) electrically connected to the plurality of input sensors (124) for transmitting the triggering signal from the enabled input sensor (124) to the multimedia playing system (11) to have a software-executing device (111) of the multimedia playing system (11) execute a function represented by the selective term associated with the enabled input sensor,
**characterized in that** the controller further includes a page identifying device (126) electrically connected to the signal-transmitting device (127), said page identifying device (126) being capable of outputting to said multimedia playing system via said signal transmitting device a page identifying signal for identifying an on-line page and for determining sensors of said on-line page that are allowed to be enabled, and of enabling any of the plurality of input sensors (124) of the on-line page.

2. The book-type controller as claimed in claim 1, **characterized in that** the page identifying device (126) includes a plurality of different patterns of through holes (161) respectively provided in the plurality of pages (1211) at specific locations, and a photo-sensor (162) positioned under the illustrative book (121) for detecting a pattern of the through holes to output the page identifying signal.

3. The book-type controller as claimed in claim 1, **characterized in that** each of the input sensors (124) consists of a thin-film contact switch (14) which conducts in response to a user's pressing operation.

4. The book-type controller as claimed in claim 3, **characterized in that** the controller further includes an encoder (125) electrically connected to all of the thin-film contact switches (14), and encoding to output the triggering signal in response to the conduction of one of the thin-film contact switches (14).

5. The book-type controller as claimed in claim 4, **characterized in that** each of the thin-film contact switches (14) includes two conductive carbon films (141) and an insulating spacer (142) located between the two carbon films (141), and the two carbon films (141) contact with each other in response to the user's pressing operation so as to conduct.

6. The book-type controller as claimed in claim 1, **characterized in that** the signal-transmitting device (127) is an IR emitter for transmitting the triggering signal to an IR receiver (118) of said multimedia playing system so as to execute the function of the selective term (1212).

## Patentansprüche

1. Buchförmige Steuervorrichtung (12) für ein interaktives Multimedia-Spielsystem (11), mit
einer Buchattrappe (121) mit mehreren Seiten (1211), von denen jede darauf eine Gruppe von Auswahlbegriffen zeigt, um einen Benutzer dadurch dem Multimedia-Spielsystem (11) einen Befehl geben zu lassen; und
einer Steuerungs-Ausführvorrichtung (122) zum Transportieren des Befehls zu dem Multimedia-Spielsystem (11),
wobei die Steuervorrichtung (12) enthält:
mehrere Eingabesensoren (124), die auf oder in jeder der mehreren Seiten (1211) angeordnet sind, wobei jeder Eingabesensor einem Auswahlbegriff (1212) zugeordnet ist und in der Lage ist, zum Ausgeben eines Auslösesignals als Reaktion auf das Drücken des Auswahlbegriffs aktiviert zu werden; und
eine mit den mehreren Eingabesensoren (124) elektrisch verbundene Signalübertragungsvorrichtung (127) zum Übertragen des Auslösesignals von dem aktivierten Eingabesensor (124) zu dem Multimedia-Spielsystem (11), so dass eine Software-Ausführungsvorrichtung (111) des Multimedia-Spielsystems (11) eine durch den Auswahlbegriff, der dem aktivierten Eingabesensor zugeordnet
ist, dargestellte Funktion ausführen kann,
**dadurch gekennzeichnet,**
**dass** die Steuerung weiter eine Seitenidentifizierungsvorrichtung (126) enthält, die mit der Signalübertragungsvorrichtung (127) elektrisch verbunden ist, wobei die Seitenidentifizierungsvorrichtung (126) in der Lage ist, dem Multimedia-Spielsystem über die Signalübertragungsvorrichtung ein Seitenidentifizierungssignal zum Identifizieren einer aktuellen Seite und zum Bestimmen von Eingabesensoren der aktuellen Seite, die aktiviert werden können, auszugeben und jeden der mehreren Eingabesensoren (124) der aktuellen Seite zu aktivieren.

2. Buchförmige Steuervorrichtung nach Anspruch 1,
**dadurch gekennzeichnet,**
**dass** die Seitenidentifizierungsvorrichtung (126) mehrere unterschiedliche Muster von Durchgangslöchern (161), die jeweils in den mehreren Seiten (1211) an bestimmten Stellen vorgesehen sind, und einen unter der Buchattrappe (121) positionierten Photosensor (162) zum Erfassen eines Musters der Durchgangslöcher, um das Seitenidentifizierungssignal auszugeben, enthält.

3. Buchförmige Steuervorrichtung nach Anspruch 1,
**dadurch gekennzeichnet,**
**dass** jeder der Eingabesensoren (124) aus einem Dünnfilm-Kontaktschalter (14) besteht, der als Reaktion auf eine Druckbetätigung durch einen Benutzer leitet.

4. Buchförmige Steuervorrichtung nach Anspruch 3,
**dadurch gekennzeichnet,**
**dass** die Steuervorrichtung weiter einen Encoder (125) enthält, der mit allen Dünnfilm-Kontaktschaltem (14) elektrisch verbunden ist und den Ausgang des Auslösesignals als Reaktion auf den leitenden Zustand eines der Dünnfilm-Kontaktschalter (14) codiert.

5. Buchförmige Steuervorrichtung nach Anspruch 4,
**dadurch gekennzeichnet,**
**dass** jeder der Dünnfilm-Kontaktschalter (14) zwei leitfähige Kohleschichten (141) und eine isolierende Zwischenschicht (142), die zwischen den zwei Kohleschichten (141) angeordnet ist; aufweist, und die zwei Kohleschichten (141) einander als Reaktion auf eine Druckbetätigung durch den Benutzer kontaktieren, um so zu leiten.

6. Buchförmige Steuervorrichtung nach Anspruch 1,
**dadurch gekennzeichnet,**
**dass** die Signalübertragungsvorrichtung (127) ein IR-Sender zum Senden des Auslösesignals zu einem IR-Empfänger (118) des Multimedia-Spielsystems (11) ist, um so die Funktion des Auswahlbegriffs (1212) auszuführen.

## Revendications

1. Contrôleur de type livre (12) pour un système de jeux multimédia interactif (11) comprenant :
un livre d'illustrations (121) comprenant plusieurs pages (1211) illustrant chacune plusieurs termes sélectifs (1212) pour permettre à un utilisateur de donner une commande au système de jeux multimédia (11) ; et
un dispositif d'exécution de commande (122) pour transmettre la commande au système de jeux multimédia (11),
ledit contrôleur (12) comprenant :
une pluralité de capteurs d'entrée (124) montés sur ou dans chacune des pages (1211), chaque capteur d'entrée étant associé à un terme sélectif (1212) et pouvant être validé pour émettre un signal de déclenchement en réponse à la pression exercée sur ledit terme sélectif ; et
un dispositif de transmission de signaux (127) électriquement connecté aux capteurs d'entrée (124) pour transmettre le signal de déclenchement depuis le capteur d'entrée validé (124) au système de jeux multimédia (11) pour assurer l'exécution par un dispositif d'exécution logiciel (111) du système de jeux multimédia (1) d'une fonction représentée par le terme sélectif associé au capteur d'entrée validé,
**caractérisé en ce que** le contrôleur comprend, en outre, un dispositif d'identification de page (126) électriquement connecté au dispositif de transmission de signaux (127), ledit dispositif d'identification de page (126) pouvant émettre à destination dudit système de jeux multimédia via ledit signal de transmission de signaux, un signal d'identification de page pour identifier une page en ligne et pour déterminer les capteurs de ladite page en ligne qui sont autorisés à être validés, et pouvant valider l'un quelconque des capteurs d'entrée (124) de la page en ligne.

2. Contrôleur de type livre selon la revendication 1, **caractérisé en ce que** le dispositif d'identification de page (126) comprend différents motifs de trous traversants (161) respectivement ménagés dans les pages (1211) en des emplacements spécifiques, et un photo-capteur (162) positionné sous le livre d'illustrations (121) pour détecter un motif des trous traversants pour émettre le signal d'identification de page.

3. Contrôleur de type livre selon la revendication 1, **caractérisé en ce que** chacun des capteurs d'entrée (124) se compose d'un commutateur de contact à couche mince (14) qui devient conducteur en réponse à la pression exercée par l'utilisateur.

4. Contrôleur de type livre selon la revendication 3, **caractérisé en ce que** le contrôleur comprend en outre un codeur (125) électriquement connecté à tous les commutateurs de contact à couche mince (14) et codant pour émettre le signal de déclenchement en réponse à la conduction de l'un des commutateurs de contact à couche mince (14).

5. Contrôleur de type livre selon la revendication 4, **caractérisé en ce que** chacun des commutateurs de contact à couches minces (14) comprend deux films de carbone conducteurs (141) et un élément d'espacement isolant (142) placé entre les deux films de carbone (141) et **en ce que** ces deux films de carbone (141) entrent en contact l'un avec l'autre en réponse à la pression exercée par l'utilisateur.

6. Contrôleur de type livre selon la revendication 1, **caractérisé en ce que** le dispositif de transmission de signaux (127) est un émetteur d'infrarouges pour transmettre le signal de déclenchement à un récepteur d'infrarouges (118) dudit système de jeux multimédia de manière à exécuter la fonction du terme sélectif (1212).
